# EUROPEAN PATENT APPLICATION

(11) **EP 4 674 563 A1**
(43) Date of publication of application: **07.01.2026**
(21) Application number: 24186847.0
(22) Date of filing: 05.07.2024
(51) Int. Cl.: B23Q 11/00

(54) **A DUST EXTRACTION ACCESSORY**

(71) Applicant: Black & Decker, Inc., New Britain, CT 06053 (US)
(72) Inventor: ROTH, Jörg, 61231 Bad Nauheim (DE); VIEHL, Maximilian, 65830 Kriftel (DE); KRAFT, Felix, 65510 Idstein (DE); BAX, Christian, 61462 Königstein im Taunus (DE); GARCIA RAMIRO, Pablo, 29020 Gossolengo (IT)
(74) Representative: SBD IPAdmin

(57) **Abstract**

A dust extraction accessory for a power tool comprises a frame and an accessory air outlet mounted to the frame and connectable to a vacuum source. A first airflow channel extends between the at least one dirty air inlet and a first airflow channel outlet and is arranged to convey dirt and / or debris from a workpiece entrained in a dirty air flow. A second airflow channel extends between at least one workpiece surface port and a second airflow channel outlet and is arranged to convey a second airflow from the workpiece surface and to generate a negative pressure between the dust extraction accessory and the workpiece surface. The second airflow is separate from the dirty air flow. The first airflow channel outlet and the second airflow channel outlet are in fluid communication with the accessory air outlet.

## Description

### Field

The present disclosure relates to a dust extraction accessory. In particular the present disclosure relates to a dust extraction ring accessory for extracting dirt and debris from near a power tool.

### Background

Power tools often generate dirt and debris when engaged with a workpiece. It is desirable to remove the dirt and debris generated by a power tool in order to protect the user and keep the worksite tidy. For example, when a power tool such as a drill is used to cut concrete a large amount of dust is created. It is important to remove concrete dust from the air so that users do not breathe it in.

It is known to use an accessory with a power tool to extract dust and debris from the workpiece. One such accessory is a dust extraction ring as shown in DE102012104487. The dust extraction ring is positioned around the power tool and this directs an airflow away from the power tool to a vacuum source. The vacuum source also generates a suction force which means that the dust extraction ring can be self-mounting on the workpiece during use. This means that the user does not have to hold the dust extraction ring when also using the power tool.

A problem with the dust extraction ring is that the power tool can generate large pieces of debris when cutting the workpiece. These large pieces can clog one or more of the airflow paths in the dust extraction ring. This means that the suction force between the dust extraction ring and the workpiece can be reduced, and the dust extraction ring can be dislodged from the workpiece which reduces the efficiency of the dust extraction ring or can stop the dust extraction ring from working altogether.

### Summary

Examples of the present disclosure aim to address the aforementioned problems.

According to an aspect of the present disclosure there is a dust extraction accessory for a power tool comprising: a frame; an accessory air outlet mounted to the frame and connectable to a vacuum source; a first airflow channel extending between the at least one dirty air inlet and a first airflow channel outlet and arranged to convey dirt and / or debris from a workpiece entrained in a dirty air flow; and a second airflow channel extending between at least one workpiece surface port and a second airflow channel outlet and arranged to convey a second airflow from the workpiece surface and to generate a negative pressure between the dust extraction accessory and the workpiece surface, the second airflow being separate from the dirty air flow; wherein the first airflow channel outlet and the second airflow channel outlet are in fluid communication with the accessory air outlet.

Optionally, the first airflow channel is separated from the second airflow channel.

Optionally, the dust extraction accessory comprises a gasket arranged to define the first airflow channel and the second airflow channel when mounted to the frame.

Optionally, the gasket comprises a gasket separating wall and the first airflow channel is defined by the gasket separating wall and a first wall of the frame and the second airflow channel is defined by the gasketing separating wall and a second wall of the frame.

Optionally, the gasket comprises a gasket foot arranged to engage with the workpiece surface.

Optionally, the gasket foot comprises a concave profile and gasket foot is configured to deform when there is a negative pressure between the gasket foot and the workpiece surface.

Optionally, the frame comprises an internal channel arranged to receive the gasket therein.

Optionally, the at least one air inlet is between the gasket foot and the frame.

Optionally, the frame comprises one or more projecting fingers arranged to limit the relative movement of the dust extraction accessory with respect to the workpiece surface when there is a negative pressure between the gasket foot and the workpiece surface.

Optionally, the at least one air inlet is between a first projecting finger and a second projecting finger.

Optionally, the gasket comprises a frame wall channel configured to seal against the second wall of the frame.

Optionally, the frame comprises a ring shape arranged to surround the power tool when the power tool engages the workpiece.

Optionally, the dust extraction accessory comprises a plurality of dirty air inlets circumferentially arranged around the frame.

Optionally, the gasket foot comprises a plurality of workpiece surface ports circumferentially arranged around the gasket foot.

Optionally, in use, the second airflow channel provides a greater negative pressure than the first airflow channel.

Optionally, the second airflow channel is configured to provide a greater negative pressure than the first airflow channel when the accessory is connected to the vacuum source.

Optionally, the first airflow channel is arranged inside of the second airflow channel.

Optionally, the second airflow channel is adjacent to and/or surrounds the first airflow channel.

Optionally, the dirty air flow from the first airflow channel outlet and the second airflow from the second airflow channel outlet mix in a chamber upstream of the accessory air outlet.

### Brief Description of the Drawings

Various other aspects and further examples are also described in the following detailed description and in the attached claims with reference to the accompanying drawings, in which:
Figure 1 shows a perspective view of the dust extraction accessory according to some examples;
Figure 2 shows an exploded perspective view of the dust extraction accessory according to some examples;
Figures 3a and 3b respectively show a top perspective view and a bottom perspective view of the dust extraction accessory according to some examples;
Figures 4a and 4b respectively show a perspective cross-sectional view and a cross-sectional view of the dust extraction accessory according to some examples;
Figures 5a and 5b show cross-sectional close-ups of the dust extraction accessory according to some examples.

### Detailed Description

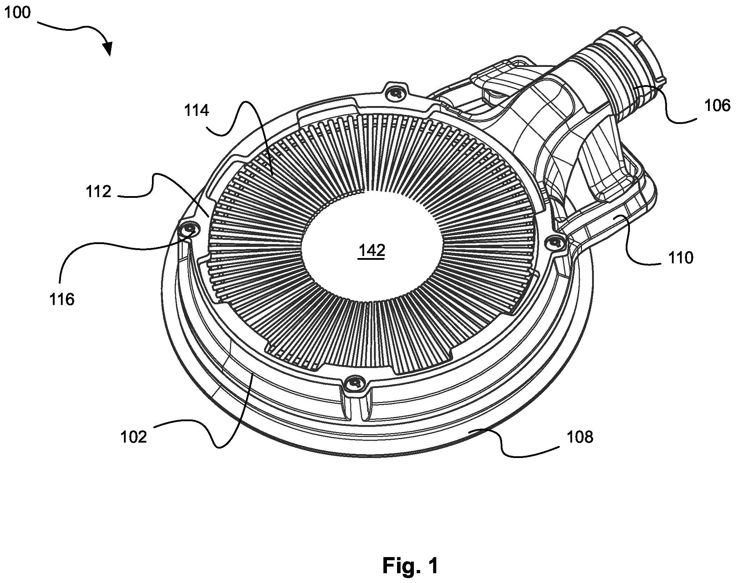

Figure 1 shows a perspective view of a dust extraction accessory 100. The dust extraction accessory 100 is configured to surround a power tool (not shown) in order to convey dirt and/or debris from the power tool when the power tool is cutting a workpiece 146.

In some examples, the power tool is a drill, for example a diamond core drill, arranged to cut holes in the workpiece 146. In some examples, the workpiece 146 may be a concrete surface. In other examples, the workpiece 146 can be any other suitable material, which generates dirt and/or debris when being cut by a power tool. The workpiece 146 can be any suitable surface e.g. a wall, a ceiling, or a floor of a building.

The dust extraction accessory 100 comprises a ring shape which is arranged to surround the power tool when the power tool is cutting the workpiece 146. As shown in figure 1, the dust extraction accessory 100 comprises a central tool hole 142 for receiving the cutting tool (not shown) of the power tool.

When the cutting tool is inserted into the central tool hole 142, the central tool hole 142 is optionally filled by the cutting tool. In some examples, the central tool hole 142 is approximately the same diameter as the cutting tool. However, in other examples, this may not be the case. For example, the cutting tool may have a smaller diameter than the diameter of the central tool hole 142. The central tool hole 142 is disposed in the centre of a brush ring 114 as shown in Figure 1. The brush ring 114 is arranged to trap dirt and debris which may be flicked upwards away from the workpiece 146 during operation. The brush ring 114 in this way is arranged to abut the side of the cutting tool as it rotates in the central tool hole 142. Depending on the size of the cutting tool, the central tool hole 142 may vary in diameter.

In other examples, the brush ring 114 can be alternatively replaced with a slurry cover (not shown). The slurry cover is a solid cover whereby the cutting tool cuts through the slurry cover before engaging the workpiece surface 122. This means that the cutting tool cuts the central tool hole 142 in the slurry cover. Accordingly, the central tool hole 142 in the slurry cover is the same diameter as the cutting tool. This creates a barrier which prevents the dirt and/or debris from flicking up towards the user during use.

The dust extraction accessory 100 comprises a frame 102 as shown in figure 1. The frame 102 is generally circular and comprises a ring shape. In other examples, the dust extraction accessory 100 can comprise any general shape, for example, a square shape, a hexagonal shape, etc. or an irregular shape. In some examples the frame 102 does not need to surround the power tool when cutting the workpiece 146. Instead, the dust extraction accessory 100 can be mounted on the workpiece adjacent to the cutting tool of the power tool.

The frame 102 comprises at least one dirty air inlet 104, and an accessory air outlet 106. The dirty air inlet 104 is configured to receive dirt and/or debris entrained in a dirty airflow. The dirt and / or debris is generated from the power tool when cutting the workpiece 146.

The accessory air outlet 106 is mounted to the frame 102 and is connectable to a vacuum source. The vacuum source is not shown in figure 1, but the accessory air outlet 106 is configured to receive a vacuum accessory and/or a vacuum hose after communication with the vacuum source. In some examples, the vacuum source can be a workshop vac or any other suitable vacuum source, such as a vacuum cleaner.

The dirty air inlet 104 is in fluid communication with the accessory air outlet 106, such that dirt and/or debris entrained in a dirty airflow at the dirty air inlet 104 is conveyed to the accessory air outlet 106.

In some examples, the dirty air inlet 104 is a plurality of the dirty air inlets 104. The plurality of dirty air inlets 104 are circumferentially arranged around the central tool hole 142. The centre of the dust extraction accessory 100 is, in some examples, concentric with the centre tool hole 142. This means that the dirty air inlets 104 are evenly distributed around the cutting tool when in use. This means that during operation, the dirt and/or debris which are sucked away from the cutting tool is sucked in different directions away from the cutting tool. This means that no single dirty air inlet 104 becomes overwhelmed with too much dirt or debris. However, in other examples, there can be a single dirty air inlet 104. Indeed, there can be any number of dirty air inlets 104 in the frame 102.

Whilst the term "dirt and/or debris" is used in the context of the dust extraction accessory 100, "dirt and/or debris" can include any type of waste material which is required to be removed from the workpiece 146. For example, if the cutting tool is cutting a workpiece 146, which comprises a concrete material, a liquid such as water may be used to reduce the amount of dust generated. This means that the dust extraction accessory 100 can also remove liquid from the workpiece 146 or a slurry mixture comprises dust and water.

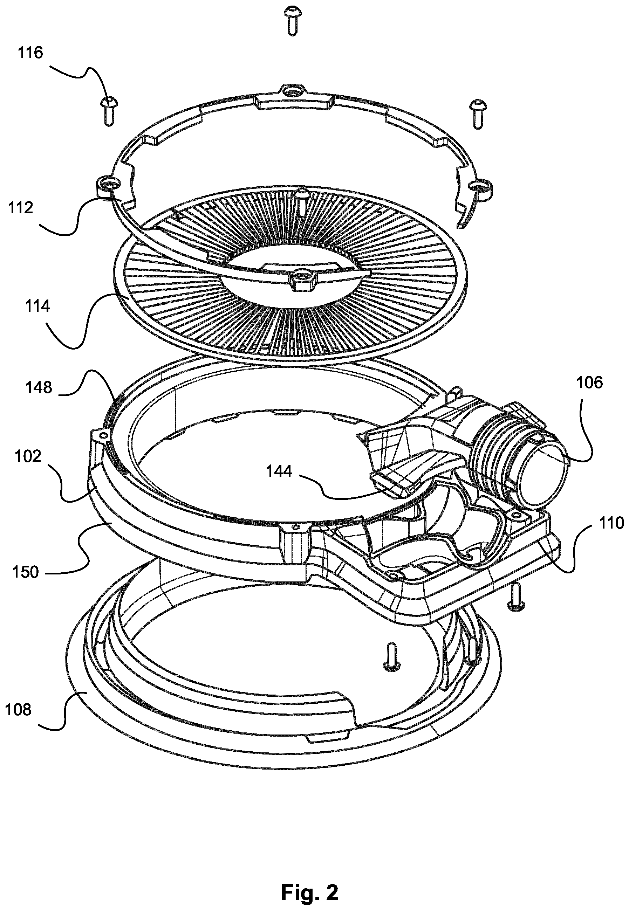

Turning to figure 2, the dust extraction accessory 100 will be described in more detail. Figure 2 shows an exploded perspective view of the dust extraction accessory 100.

The dust extraction accessory 100, as described above, comprises a frame 102. The frame 102 provides the structure and rigidity for the dust extraction accessory 100. A brush ring 114 is mounted to an upper frame side 148 of the frame 102. The brush ring 114 is secured to the frame 102 via a cover ring 112. The cover ring 112 clamps down on the upper frame side 148 and clamps the brush ring 114 to the frame 102. The cover ring 112 is secured to the frame 102 via a plurality of fasteners 116. For the purposes of clarity, only one fastener 116 has been labelled in figure 2.

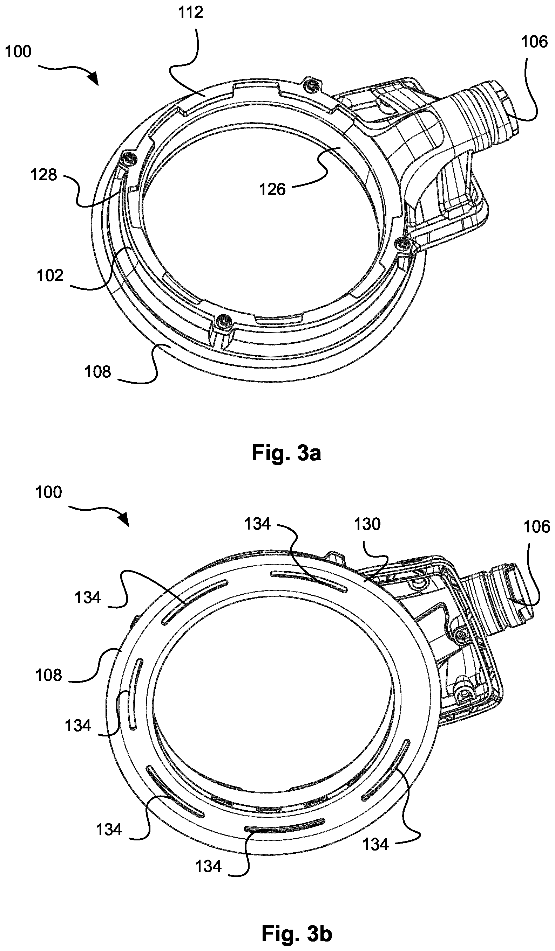

A gasket 108 is optionally mounted to a lower frame side 150 of the frame 102 and is configured to engage the workpiece surface 122. The gasket 108 will be described in more detail with respect to Figures 3a and 3b.

Each of the frame 102, the brush ring 114, the cover ring 112 and the gasket 108 are circular and concentric with each other. As mentioned above, the cover ring 112 is mountable to the frame 102 via a plurality of fasteners 116. Accordingly, the cover ring 112 can be removed by the user in order to replace the brush ring 114. For example, the user can replace the brush ring 114 with an alternative brush ring 114 with a different sized centre tool hole 142. Alternatively, the user can replace the brush ring 114 with a slurry cover. For example, the user may wish to use a slurry cover instead of the brush ring 114 when applying water to the workpiece 146 to reduce the dust. In this way, the dust extraction accessory 100 can be used for dry cutting or wet cutting with the power tool.

As shown in figure 2, the frame 102 comprises a stabiliser portion 110, which projects laterally from the side of the frame 102. The stabiliser portion 110 is configured to receive an air outlet component 152.

The air outlet component 152 comprises the accessory air outlet 106 and is mountable to the frame 102. This means that the air outlet component 152 and the frame 102 can be made in separate manufacturing processes. The air outlet component 152 comprises air outlet arms 144, which project laterally from the air outlet component 152. The air outlet arms 144 provide fastening holes to receive fasteners 116 therein. The stabiliser portion 110 ensures that the air outlet component 152 is securely fixed to the frame 102 and does not move with respect to the frame 102. In other examples, the air outlet component 152 is integral with the frame 102.

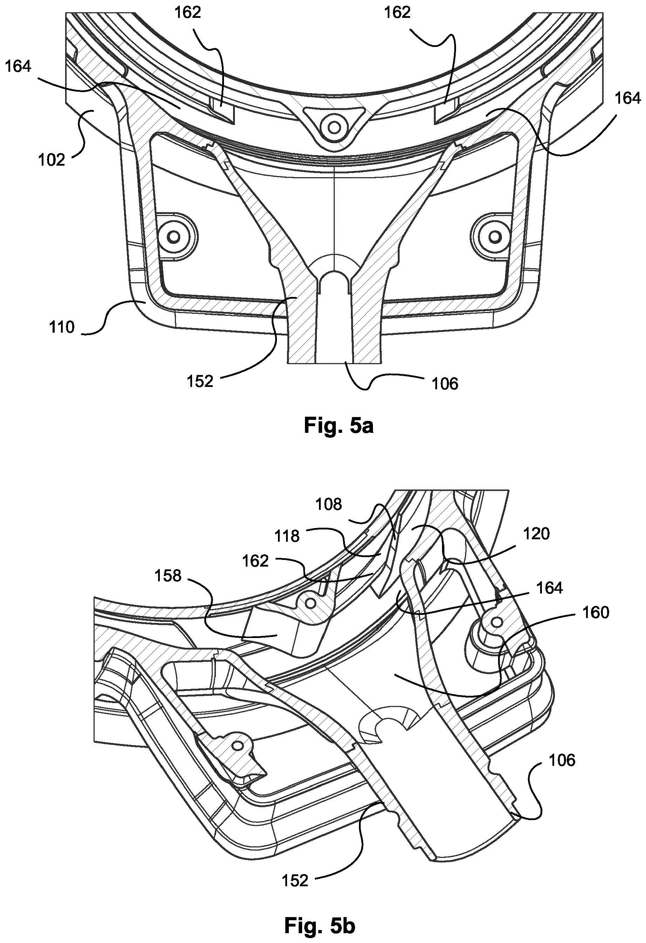

When the air outlet component 152 is mounted on the frame 102, the accessory air outlet 106 is in fluid communication with the dirty air inlets 104. The engagement of the air outlet component 152 and the frame 102 is shown in more detail with respect to Figures 5a and 5b.

Turning to Figures 3a and 3b, the dust extraction accessory 100 will be discussed in more detail. Figures 3a and 3b respectively show a top perspective view and a bottom perspective view of the dust extraction accessory 100.

Figure 3a shows the dust extraction accessory 100 in a similar configuration to that shown in figure 1. However, the brush ring 114 is not shown in figure 3a. Indeed, in some examples, albeit less preferable, the dust extraction accessory 100 can be used without a brush ring 114 or a slurry cover. However, this may be less desirable because dirt and/or debris and/or liquid can be flicked up by the cutting tool away from the workpiece surface 122 towards the user. Indeed, in some examples, the cover ring 112 is not required either.

Figure 3a shows the inside of the frame 102 which comprises a circular inner first frame wall 126. The first frame wall 126 is a wall of the frame 102 which faces the cutting tool when the dust extraction accessory 100 is in use.

Likewise, the frame 102 also comprises a circular outer second frame wall 128. The second frame wall 128 is another wall of the frame 102 which faces away from the first frame wall 126. The first frame wall 126 and the second frame wall 128 define an internal channel 132 within the frame 102. The internal channel 132 is arranged to be in fluid communication with the accessory air outlet 106. The gasket 108 is arranged to be received within the internal channel 132 of the first frame 102.

Figure 3b shows the underside of the dust extraction accessory 100 wherein the gasket 108 and the gasket foot 130 can be viewed in Figure 3b. A plurality of workpiece surface ports 134 are circumferentially arranged around the gasket 108.

The workpiece surface ports 134 are configured to be positioned such that they are adjacent to the workpiece surface 122 when the dust extraction accessory 100 is in use. The workpiece surface ports 134 are configured to convey an airflow from the workpiece surface 122 to the accessory air outlet 106. Since the airflow conveys air from the gasket foot 130 and the workpiece surface ports 134, a negative pressure in the region between the gasket foot 130 and the workpiece surface 122 is generated. This causes a suction force and the dust extraction accessory 100 is sucked against the workpiece surface 122.

The plurality of workpiece surface ports 134 are arranged circumferentially around the gasket 108. As shown in Figure 3b there are 6 workpiece surface ports 134. However, in other examples, there can be any suitable number of workpiece surface ports 134 e.g. 3, 4, 5, 7 etc.

The gasket foot 130 and the workpiece surface ports 134 are in fluid isolation from the dirty air inlets 104. This means that dirt and debris generated by the cutting tool of the power tool are not entrained in an airflow and sucked into the workpiece surface ports 134. Accordingly, the workpiece surface ports 134 remain clear from dirt and debris and the suction force generated by the dust extraction accessory 100 against the workpiece 146 is not affected by the amount or size of dust and/or dirt generated by the power tool. This means that the dirty air flow between the dirty air inlets 104 and the accessory air outlet 106 and the second airflow between the workpiece surface ports 134 and the accessory air outlet 106 are separated. This means that the respectively airflow paths of the dirty air flow and the second airflow do not overlap.

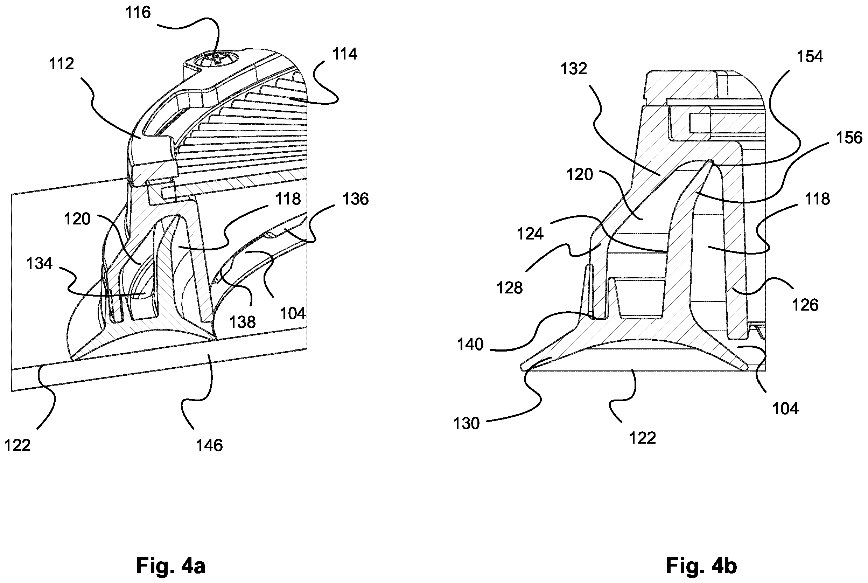

The gasket 108 and the dust extraction accessory 100 will now be described in more detail with respect to Figures 4a and 4b. Figures 4a and 4b respectively show a cross-sectional perspective view and a cross-sectional view of the dust extraction accessory 100.

The gasket 108 is arranged to be inserted into the internal channel 132 of the frame 102. The gasket 108 is configured to define a first airflow channel 118 and a second airflow channel 120 when inserted into the internal channel 132.

In some examples, the gasket 108 is made from a rubber compound or silicone or another deformable material. Since the gasket 108 is deformable, it can make a good seal with the workpiece surface 122 when the vacuum source is connected to the dust extraction accessory 100. As mentioned above, the gasket 108 is optional. In a less preferred example, there is no gasket 108, but rather the workpiece surface ports 134 are located in a cover portion (not shown) of the frame on the lower frame side 150.

The first airflow channel 118 extends between one or more of the dirty air inlets 104 and a first airflow channel outlet 162. Optionally, the first airflow channel outlet 162 is the same as the accessory air outlet 106. However, in other examples (e.g. as shown in Figures 5a and 5b), the accessory air outlet 106 is downstream of the first airflow channel outlet 162. In this way the first airflow channel 118 is arranged to convey dirt and/or debris from the power tool which is entrained in a dirty airflow. As mentioned previously the power tool can also be used together with a source of liquid i.e. water to reduce the amount of dust and therefore the first airflow channel 118 can also convey particles of liquid which are also entrained in the dirty airflow.

At the same time the gasket 108 defines the second airflow channel 120. The second airflow channel 120 extends between one or more workpiece surface ports 134 a second airflow channel outlet 164. Optionally, the second airflow channel outlet 164 is the same as the accessory air outlet 106. However, in other examples (e.g. as shown in Figures 5a and 5b), the accessory air outlet 106 is downstream of the second airflow channel outlet 162. The second airflow channel 120 is arranged to convey an airflow from the workpiece surface 122 and generate a negative pressure between the dust extraction accessory 100 and the workpiece surface 122.

As shown in Figures 4a and 4b the gasket 108 comprises a gasket separating wall 124. The gasket separating wall 124 extends from the gasket foot 130 and projects into the internal channel 132. The gasket separating wall 124 engages the surface of the internal channel 132 and creates a seal therebetween. In this way the gasket separating wall 124 isolates the first airflow channel 118 and the second airflow channel 120 within the frame 102.

The gasket 108 further comprises a frame wall channel 140 for receiving the second frame wall 128. The frame wall channel 140 of the gasket 108 provides a seal against the second frame wall 128. In this way the airflow conveyed by the second airflow channel 120 is conveyed from the gasket foot 130.

As the dust extraction accessory 100 is used at the start of an operation, the airflow within the second airflow channel 120 will cause the gasket foot 130 to collapse. As shown in figure 4b, the gasket foot 130 comprises a concave shape which, when not in use, means that the workpiece surface port 134 is positioned at a distance away from the workpiece surface 122. However, as the negative pressure is created in the second airflow channel 120 and within the gasket foot 130, the gasket foot 130 deforms and the gasket 108 moves towards the workpiece surface 122. This increases the surface area of the gasket foot 130 which is in contact with the workpiece surface 122 and improves the seal between the gasket 108 and the workpiece surface 122.

At this point, the gasket foot 130 creates a seal with the workpiece surface 122. The seal between the gasket foot 130 and the workpiece surface 122 continues so long as the vacuum source generates the airflow from the workpiece surface port 134 via the second airflow channel outlet 164 and the accessory air outlet 106.

The dirty air inlets 104 are shown in figure 4b between the gasket foot 130 and the first frame wall 126. As mentioned previously, a plurality of dirty air inlets 104 are circumferentially positioned around the first frame wall 126. In order to maintain the airflow during operation from the dirty air inlets 104 to the first airflow channel outlet 162 and the accessory air outlet 106 in use, the first frame wall 126 is prevented from physically engaging the gasket foot 130.

In some examples, the first frame wall 126 comprises a first projecting finger 136 and a second projecting finger 138 which are positioned on either side of the dirty air inlet 104.

Whilst figure 4a only shows the first projecting finger 136 and the second projecting finger 138, the frame 102 comprises a plurality of first and second projecting fingers 136,138 circumferentially positioned around the first frame wall 126 with a dirty air inlet 104 positioned between respective first and second projecting fingers 136,138. Accordingly in use, as the gasket foot 130 deforms and flattens, the first and second projecting fingers 136, 138 engage the gasket foot 130 first and prevent the dirty air inlet 104 from closing. This ensures that the dirty air inlets 104 are always in fluid communication with the first airflow channel 118 and the accessory air outlet 106.

In some examples, the gasket 108 is removable from the frame 102. This means that the gasket 108 can be replaced when parts of the gasket 108, e.g. the gasket foot 130, become worn or damaged. The gasket 108 may be mounted on the frame 102 with a friction fit, and the user can push the gasket 108 on to the frame 102. Optionally, the gasket 108 can be mounted to the frame 102 with adhesive. However, in alternative examples, the gasket 108 can be integral with the frame 102. For example, the gasket 108 can be overmolded onto the frame 102.

The gasket 108 is discussed in reference to Figures 4a and 4b, wherein a part of the gasket 108 itself defines the first airflow channel 118 and the second airflow channel 120. In other examples, the first airflow channel 118 and the second airflow channel 120 can be integral to the frame 102. For example, the internal channel 132 of the frame 102 can comprise a structure which defines a separate first airflow channel 118 and a second airflow channel 120. The gasket 108 is then arranged to seal against the internal structure of the frame 102 and the internal channel 132. For example, the gasket 108 does not include the gasket separating wall 124, but instead the internal channel 132 of the frame 102 comprises an intermediate wall (not shown) that is integral with the frame 102. In this example, the gasket 108 comprises the gasket foot 130 which mounts to the first frame wall 126, the second frame wall 128 and the intermediate wall in order to define the first airflow channel 118 and the second airflow channel 120. Accordingly, the second airflow channel 120 is adjacent to and/or surrounds the first airflow channel 118.

In the examples as shown in figure 4b, the first airflow channel 118 is inside the second airflow channel 120. That is, the first airflow channel 118 is closer to the first frame wall 126 and the second airflow channel 120 is closer to the second frame wall 128. This means that the second airflow channel 120 has a larger diameter than the first airflow channel 118. In some examples, the first airflow channel 118 has a smaller cross sectional area than the second airflow channel 120.

The gasket separating wall 124 in some examples engages the internal channel surface 154 at the deepest part of the internal channel 132 in the frame 102. However, in other examples the gasket separating wall 124 can engage different parts of the internal channel 132 in order to change the relative cross-sectional area sizes of the first airflow channel 118 and the second airflow channel 120.

In some examples the gasket separating wall 124 comprises an inclined end portion 156. The inclined end portion 156 is inclined towards the first frame wall 126. This provides a curve to the gasket separating wall 124 and means that the gasket separating wall 124 is urged against the internal channel surface 154. This means that the gasket separating wall 124 is harder to move during use and ensures that the first airflow channel 118 and the second airflow channel 120 are in isolation from each other. Accordingly, dirt and debris entrained in a dirty airflow within the first airflow channel 118 does not contaminate the airflow in the second airflow channel 120.

In some examples the second airflow channel 120 comprises a greater negative pressure than the first airflow channel 118. This is because the dirty air inlets 104 are prevented from sealing when the gasket foot 130 deforms. Accordingly, the partial vacuum within the second airflow channel 120 and the gasket foot 130 will be greater than the partial vacuum in the first airflow channel 118.

The dust extraction accessory 100 we discussed in more detail with respect to Figures 5a and 5b.

Figures 5a and 5b respectively show cross-sectional close-ups of the dust extraction accessory 100.

In particular, Figures 5a and 5b show the air outlet component 152 mounted to the frame 102 at the stabiliser portion 110.

The first airflow channel 118 and the second airflow channel 120 merge within the air outlet component 152. The airflow from the first airflow channel 118 and the airflow from the second airflow channel 120 are diverted by a deflector 158 mounted to the frame 102.

The dirty air flow in the first airflow channel 118 flows from the dirty air inlets 104 to at least one first airflow channel outlet 162. The second air flow in the second airflow channel 120 flows from the workpiece surface ports 164 to at least one second airflow channel outlet 164. The air exits from the first airflow channel 118 and the second airflow channel 120 respectively at the first airflow channel outlet 162 and the second airflow channel outlet 164 and then mixes within a mixing chamber 160 before exiting the accessory air outlet 106 and being conveyed by the vacuum source. In this way the dirty air flow from the first airflow channel 118 and the second airflow from the second airflow channel 120 mix in the mixing chamber 160 upstream of the accessory air outlet 106. In some examples, the mixing chamber 160 is optional, and the dirty air flow from the first airflow channel 118 and the second airflow from the second airflow channel 120 mix at the accessory air outlet 106. In this case, the accessory air outlet 106 is both the first airflow channel outlet 162 and the second airflow channel outlet 164.

The deflector 158 prevents the airflow from interfering with the air flows and causes the airflow to exit the accessory air outlet 106 correctly. Since the frame 102 is a ring shape, the first airflow channel 118 and the second airflow channel 120 allow the airflow to exit at either end of the first airflow channel 118 at the first airflow channel outlet 162 and the second airflow channel 120 at the second airflow channel outlet 164 which is shown in Figures 5a and 5b. In the example as shown in Figures 5a and 5b, there are two first airflow channel outlets 162 and two second airflow channel outlets 164.

However, if the dust extraction accessory 100 is not a loop, e.g. such as a ring as shown in the Figures, but rather a linear dust extraction accessory 100, then the first airflow channel 118 and the second airflow channel 120 will only exit at one end of the first airflow channel 118 at a single first airflow channel outlet 162 and the second airflow channel 120 at a single second airflow channel outlet 164. This is in contrast to the arrangement, as shown in Figures 5a and 5b, where the airflow can exit at both ends of the first airflow channel 118 and the second airflow channel 120.

In another example, two or more examples are combined. Features of one example can be combined with features of other examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A dust extraction accessory for a power tool comprising:
a frame;
an accessory air outlet mounted to the frame and connectable to a vacuum source;
a first airflow channel extending between the at least one dirty air inlet and a first airflow channel outlet and arranged to convey dirt and / or debris from a workpiece entrained in a dirty air flow; and
a second airflow channel extending between at least one workpiece surface port and a second airflow channel outlet and arranged to convey a second airflow from the workpiece surface and to generate a negative pressure between the dust extraction accessory and the workpiece surface, the second airflow being separate from the dirty air flow;
wherein the first airflow channel outlet and the second airflow channel outlet are in fluid communication with the accessory air outlet.

2. The dust extraction accessory according to claim 1 wherein the first airflow channel is separated from the second airflow channel.

3. The dust extraction accessory according to claims 1 or 2 wherein the dust extraction accessory comprises a gasket arranged to define the first airflow channel and the second airflow channel when mounted to the frame.

4. The dust extraction accessory according to claim 3 wherein the gasket comprises a gasket separating wall and the first airflow channel is defined by the gasket separating wall and a first wall of the frame and the second airflow channel is defined by the gasketing separating wall and a second wall of the frame.

5. The dust extraction accessory according to any of claims 3 to 4 wherein the gasket comprises a gasket foot arranged to engage with the workpiece surface.

6. The dust extraction accessory according to claim 5 wherein the gasket foot comprises a concave profile and gasket foot is configured to deform when there is a negative pressure between the gasket foot and the workpiece surface.

7. The dust extraction accessory according to any of claims 3 to 6 wherein the frame comprises an internal channel arranged to receive the gasket therein.

8. The dust extraction accessory according to any of claims 5 to 7 wherein the at least one air inlet is between the gasket foot and the frame.

9. The dust extraction accessory according to any of the preceding claims wherein the frame comprises one or more projecting fingers arranged to limit the relative movement of the dust extraction accessory with respect to the workpiece surface when there is a negative pressure between the gasket foot and the workpiece surface.

10. The dust extraction accessory according to claim 9 wherein the at least one air inlet is between a first projecting finger and a second projecting finger.

11. The dust extraction accessory according to any of claims 4 to 10 wherein the gasket comprises a frame wall channel configured to seal against the second wall of the frame.

12. The dust extraction accessory according to any of the preceding claims wherein the frame comprises a ring shape arranged to surround the power tool when the power tool engages the workpiece.

13. The dust extraction accessory according to any of the preceding claims wherein the dust extraction accessory comprises a plurality of dirty air inlets circumferentially arranged around the frame.

14. The dust extraction accessory according to any of claims 5 to 13 wherein the gasket foot comprises a plurality of workpiece surface ports circumferentially arranged around the gasket foot.

15. The dust extraction accessory according to any of the preceding claims wherein, in use, the second airflow channel provides a greater negative pressure than the first airflow channel.

16. The dust extraction accessory according to any of the preceding claims wherein the second airflow channel is adjacent to and/or surrounds the first airflow channel.

17. The dust extraction accessory according to any of the preceding claims wherein the dirty air flow from the first airflow channel outlet and the second airflow from the second airflow channel outlet mix in a chamber upstream of the accessory air outlet.
